# EUROPEAN PATENT SPECIFICATION

(11) **EP 0 819 629 B1**
(45) Date of publication and mention of the grant of the patent: **26.05.2004**
(21) Application number: 97305080.0
(22) Date of filing: 10.07.1997
(51) Int. Cl.: B65G 53/30

(54) **A method of transporting a solids component of a slurry**
Förderverfahren für feste Komponenten einer Suspension
Procédé de transport d'un constituant solide d'une suspension

(30) Priority: 15.07.1996 GB 9614859
(43) Date of publication of application: 21.01.1998
(73) Proprietor: Merpro Products Limited, Montrose, Angus DD10 9JA (GB)
(72) Inventor: Delves, James Edward, Portishead, Bristol (GB); Parkinson, David John, Portishead, Bristol BS20 7LB (GB)
(74) Representative: Jackson, Peter Arthur

(56) References cited:
- WO-A-95/07325
- WO-A-96/05128
- DE-B- 1 246 555
- FR-A- 1 461 616
- FR-A- 2 633 263
- GB-A- 1 032 537
- GB-A- 1 059 488
- GB-A- 2 161 469
- US-A- 4 699 548

## Description

Methods of conveying a slurry are disclosed in US-A-4952099 and US-A-4978251. These methods use a vessel having a fluidising unit with both a supply duct, which is fed with liquid under pressure from outside the vessel and has an outlet opening into the vessel, and a discharge duct within the supply duct and leading outside a vessel to the desired export location. The slurry is loaded into a vessel through an inlet, while a liquid component of the slurry is allowed to overflow through an outlet from the vessel. The inlet and outlet are then closed, and liquid is fed to the liquid supply duct to fluidise the bed and cause the slurry to be transported through the discharge duct and out of the vessel. This method has been found to be extremely efficient in transporting slurries over long distances, and also provides the advantage that the slurry does not have to come into contact with the moving parts of a pump.

The present invention relates to an improvement of such methods.

According to the present invention there is provided a method of transporting a solids component of a slurry wherein, in a first stage, the slurry is fed through a first conduit into the upper part of a settling vessel in which the solids component settles downwards in the vessel while a liquid component of the slurry overflows through a second conduit from the upper part of the vessel; and, in a second stage, the first conduit is closed and the overflow through the second conduit is stopped and a third conduit is opened to provide a feed of liquid under pressure into the upper part of the vessel while the solids component is removed from the lower part of the vessel by means of a fluidising unit having both a supply duct, which is fed with liquid under pressure from outside the vessel through a fourth conduit and has an outlet opening into the vessel, and a discharge duct within the supply duct and leading through a fifth conduit outside the vessel to the desired export location.

The introduction of pressurised liquid into the upper part of the vessel through the third conduit while the fluidising unit is discharging slurry serves to compact the bed of slurry and this results in a number of advantages. In the prior art methods, the fluidising unit fluidised the entire bed within the vessel. With the present invention, only the bed adjacent to the outlet of the supply duct is fluidised, so that the discharge of the slurry from the vessel is more efficient. The pressurised water through the third conduit also ensures that as slurry is discharged through the fluidising unit, the remaining slurry is forced down in the vessel to ensure a constant supply of slurry to the fluidising unit. Not only does this result in a faster discharge of the slurry from the vessel but it also ensures that the rheology of the slurry remains constant, whereas in the prior art, the density of the slurry is reduced over time. This is useful in subsequent transportation of the slurry.

The method is particularly effective when the flow through the third and fourth conduits is at the same or substantially the same pressures to provide a balanced flow within the vessel. One way of achieving this is to feed the third and fourth conduits from a common liquid feed.

In order to reduce the number of ports in the settling vessel, the third conduit may join the second conduit with the flow through the second and third conduits in the first and second stages being controlled by valves.

The slurry can be fed through the first conduit in a number of ways. Preferably a second fluidising unit is provided in a slurry source to feed the slurry through the first conduit into the upper part of the settling vessel, the second fluidising unit having a second supply duct, which is fed with liquid under pressure, and a second discharge duct within the supply duct and leading to the first conduit. If the second fluidising unit is operating at atmospheric pressure, it is useful to provide a jet pump on the second discharge duct to boost the flow of slurry through the second fluidising unit to the first conduit. This arrangement is disclosed in GB-A-2285030.

Any suitable valve may be used to close the first conduit when changing to the second stage. However, it has been found simplest to use a float valve, as this will close automatically when liquid is fed into the vessel through the third conduit so that the valve does not need to be controlled. The float valve is preferably a ball, which may be guided by an inclined cage onto a seating, or may simply be unconstrained within the settling vessel.

The operation of the fluidising unit is more efficient if the liquid leaving the supply duct is caused to swirl about a common axis of the supply duct and discharge duct in order to generate a vortex which entrains the solids component and transports it up through the discharge duct. The swirl may be generated by a tangential feed into the supply duct, or by angled slots in the wall of the supply duct. The fluidising unit operates more efficiently when the discharge duct projects beyond the outlet of the supply duct.

In order to provide a constant flow of slurry for transportation to the desired export location, a plurality of settling vessels can be provided, so that while solids are being removed from one vessel during the second stage, further solids are being loaded into another vessel during the first stage. Because the method produces a slurry having a constant rheology, the overall discharge from the plurality of settling vessel remains constant.

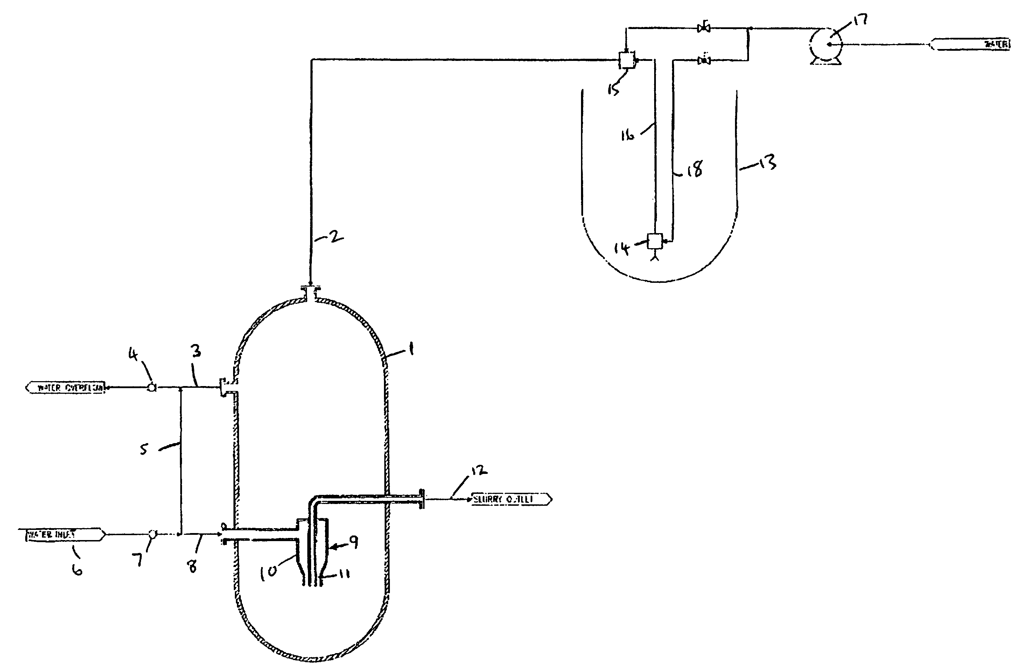

A method in accordance with the present invention will now be described with reference to the accompanying drawing which is an apparatus suitable for carrying out the method.

A pressure vessel 1 is provided with a first conduit 2 which leads into the top of the vessel. The slurry is loaded into the vessel 1 through the first conduit 2 in a manner to be described. A second conduit 3 is provided for liquid overflow from the top of the vessel 1. The flow through the second conduit is controlled by a first valve 4. A third conduit 5 for the supply of water under pressure from a source 6 joins the second conduit 3 between the first valve 4 and vessel 1, so as to share a common port into the vessel. The flow through the third conduit is controlled by a second valve 7.

A first fluidising unit 9 is provided in a lower part of the vessel 1. The first fluidising unit has a supply duct 10 which is supplied with liquid under pressure from a fourth conduit 8 which branches off from the third conduit 5 downstream of the second valve 7. A discharge duct 11 is provided coaxially within the supply duct 10 and communicates with a fifth conduit 12 for leading the slurry to a desired export location.

The vessel 1 is loaded with solids from a solids tank 13. The solids tank 13 is provided with a second fluidising unit 14 which is similar in construction and operation to the first fluidising unit 9. One exception is that a jet pump 15 is provided on the discharge duct 16 in order to generate sufficient pressure in the discharge duct 16 for the second fluidising unit to function. The jet pump is fed with water from a pump 17 which also provides pressurised water for the supply duct 18 of the second fluidising unit 14. The water pumped to the supply duct 18 of the second fluidising unit 14 is caused to swirl as it leaves the supply duct. This generates a vortex, which entrains the solids in the solids tank, and transports them, with the aid of the pressure produced by the jet pump 15, up through the discharge duct 16, through the first conduit 2 and into the vessel 1. In an alternative arrangement, the second fluidising unit is mounted in an inverted position through the bottom of the solids tank so that the supply and discharge ducts open upwardly.

In the vessel 1, the solids sink, while the water overflows through the second conduit 3. When sufficient solids have been loaded into the tank, the pump 17 is stopped, so that the supply of slurry to the vessel is ceased, and the first valve 4 is closed. The second valve 7 is then opened, so that pressurised water is fed to the top of the tank through the third conduit 5, and to the first fluidising unit through the fourth conduit 8. The pressurised liquid supplied to the first fluidising unit 9 through the fourth conduit 8 is caused to swirl about the axis of the supply duct as it leaves the supply duct 10 thereby generating a vortex which fluidises the bed directly below the first fluidising unit. The vortex causes the slurry to be discharged up through the discharge duct 11 and through the fifth conduit 12 to a desired location. The simultaneous supply of pressurised liquid to the top of the vessel 1 through the third conduit 5 causes a float valve (not shown) to float up against a seat to seal against the first conduit 2 allowing pressure to build up within the vessel. This causes the slurry bed to be compacted, and to be forced progressively down through the pressure vessel as the slurry is discharged through the first fluidising unit 9. It also ensures that only the part of the bed directly below the first fluidising unit 9 is fluidised.

## Claims

1. A method of transporting a solids component of a slurry wherein, in a first stage, the slurry is fed through a first conduit (2) into the upper part of a settling vessel (1) in which the solids component settles downwards in the vessel while a liquid component of the slurry overflows through a second conduit (3) from the upper part of the vessel; and, in a second stage, the first conduit (2) is closed and the overflow through the second conduit (3) is stopped and a third conduit (5) is opened to provide a feed of liquid under pressure into the upper part of the vessel while the solids component is removed from the lower part of the vessel by means of a fluidising unit (9) having both a supply duct (10), which is fed with liquid under pressure from outside the vessel through a fourth conduit (8) and has an outlet opening into the vessel, and a discharge duct (11) within the supply duct and leading through a fifth conduit (12) outside the vessel to the desired export location.

2. A method according to claim 1, wherein the third (5) and fourth (8) conduits are fed from a common liquid feed.

3. A method according to claim 1 or claim 2, wherein the third conduit (5) joins the second conduit (3) with the flow through the second and third conduits in the first and second stages being controlled by valves (4,7).

4. A method according to any one of the preceding claims, wherein a second fluidising unit (14) is provided in a slurry source to feed the slurry through the first conduit (2) into the upper part of the settling vessel (1), the second fluidising unit having a second supply duct (18), which is fed with liquid under pressure, and a second discharge duct (16) within the supply duct and leading to the first conduit.

5. A method according to claim 4, wherein a jet pump (15) is provided on the second discharge duct (16) to boost the flow of slurry through the second fluidising unit (14) to the first conduit (2).

6. A method according to any one of the preceding claims, wherein the first conduit (2) is closed by a float valve when changing to the second stage.

7. A method according to claim 6, wherein the float valve is a ball.

8. A method according to claim 7, wherein the ball is guided by an inclined cage onto a seating.

9. A method according to claim 7, wherein the ball is unconstrained within the settling vessel.

10. A method according to any one of the preceding claims, wherein the liquid leaving the supply duct (10) is caused to swirl about a common axis of the supply duct and discharge duct in order to generate a vortex which entrains the solids component and transports it up through the discharge duct (11).

11. A method according to any one of the preceding claims, wherein the discharge duct (11) projects beyond the outlet of the supply duct (10).

12. A method according to claim 10, wherein the swirl is generated by angled slots in the wall of the supply duct (10).

13. A method according to any one of the preceding claims, wherein a plurality of settling vessels (1) are provided, so that while solids are being removed from one vessel during the second stage, further solids are being loaded into another vessel during the first stage.

## Patentansprüche

1. Förderverfahren für feste Bestandteile eines Schlickers, bei welchem in einem ersten Stadium der Schlicker über eine erste Rohrleitung (2) in den oberen Teil eines Absetzgefäßes (1) zugeführt wird, in dem sich die festen Bestandteile unten im Gefäß absetzen, hingegen die flüssigen Bestandteile des Schlickers durch eine zweite Rohrleitung (3) aus dem oberen Teil des Gefäßes abfließen; und in einem zweiten Stadium die erste Rohrleitung (2) geschlossen wird und das Ablaufen durch die zweite Rohrleitung (3) unterbrochen wird und eine dritte Rohrleitung (5) geöffnet wird, um für eine Zufuhr von unter Druck stehender Flüssigkeit in den oberen Teil des Gefäßes zu sorgen, während die festen Bestandteile aus dem unteren Teil des Gefäßes mittels einer Fluidisierungseinheit (9) entfernt werden, die sowohl über einen Zuführkanal (10), dem unter Druck stehende Flüssigkeit von außerhalb des Gefäßes über eine vierte Rohrleitung (8) zugeführt wird und der einen zum Gefäß hin offenen Auslass aufweist, als auch über einen Abführkanal (11) verfügt, der sich innerhalb des Zuführkanals befindet und der über eine außerhalb des Gefäßes befindliche fünfte Rohrleitung (12) zum gewünschten Austragort führt.

2. Verfahren nach Anspruch 1, bei welchem die dritte (5) und die vierte Rohrleitung (8) von einer gemeinsamen Flüssigkeitszuführung gespeist werden.

3. Verfahren nach einem der Ansprüche 1 oder 2, bei dem die dritte Rohrleitung (5) mit der zweiten Rohrleitung (3) verbunden ist, wobei im ersten und zweiten Stadium die Strömung durch die zweiten und dritten Rohrleitungen mittels Ventilen (4, 7) gesteuert wird. umwirbelt, so dass ein Wirbel erzeugt wird, der die festen Bestandteile mitreißt und diese durch den Abführkanal (11) nach oben fördert.

4. Verfahren nach einem der vorhergehenden Ansprüche, bei welchem eine zweite Fluidisierungseinheit (14) in einer Schlickerquelle vorgesehen ist, um den Schlicker durch die erste Rohrleitung (2) dem oberen Teil des Absetzgefäßes (1) zuzuführen, wobei die zweite Fluidisierungseinheit einen zweiten Versorgungskanal (18), der mit unter Druck stehender Flüssigkeit gespeist wird, und einen zweiten Abführkanal (16) aufweist, der innerhalb des Versorgungskanals liegt und zur ersten Rohrleitung führt.

5. Verfahren nach Anspruch 4, bei welchem eine Strahlpumpe (15) am zweiten Abführkanal (16) vorgesehen ist, um die durch die zweite Fluidisierungseinheit (14) hindurch zur ersten Rohrleitung (2) verlaufende Strömung des Schlickers zu verstärken.

6. Verfahren nach einem der vorhergehenden Ansprüche, bei welchem beim Wechsel zum zweiten Stadium die erste Rohrleitung (2) durch ein Schwimmerventil verschlossen wird.

7. Verfahren nach Anspruch 6, bei welchem das Schwimmerventil eine Kugel ist.

8. Verfahren nach Anspruch 7, bei welchem die Kugel durch einen geneigten Käfig auf eine Sitzfläche gelenkt wird.

9. Verfahren nach Anspruch 7, bei welchem die Kugel sich innerhalb des Absetzgefäßes frei bewegen kann.

10. Verfahren nach einem der vorhergehenden Ansprüche, bei welchem bei der Flüssigkeit , die den Versorgungskanal (10) verlässt, dafür gesorgt wird, dass sie um eine gemeinsame Achse von Versorgungskanal und Abführkanal herumwirbelt, so dass ein Wirbel erzeugt wird, der die festen Bestandteile mitreißt und diese durch den Abführkanal (11) nach oben fördert.

11. Verfahren nach einem der vorhergehenden Ansprüche, bei welchem der Abführkanal (11) über den Auslass des Zuführkanals (10) vorragt.

12. Verfahren nach Anspruch 10, bei welchem der Wirbel durch in der Wandung des Zuführkanals (10) befindliche winklige Schlitze erzeugt wird.

13. Verfahren nach einem der vorhergehenden Ansprüche, bei welchem eine Mehrzahl von Absetzgefäßen (1) vorgesehen ist, so dass, während Feststoffe aus dem einen im zweiten Stadium befindlichen Gefäß entfernt werden, weitere Feststoffe einem im ersten Stadium befindlichen anderen Gefäß zugeführt werden.

## Revendications

1. Procédé de transport d'un constituant solide d'une suspension, dans lequel, dans une première étape, la suspension est acheminée à travers une première conduite (2) dans la partie supérieure d'une cuve de décantation (1) dans laquelle le constituant solide se dépose vers le bas dans la cuve tandis qu'un constituant liquide de la suspension déborde à travers une deuxième conduite (3) de la partie supérieure de la cuve ; et, dans une deuxième étape, la première conduite (2) est fermée et le débordement à travers la deuxième conduite (3) est arrêté et une troisième conduite (5) est ouverte pour fournir une alimentation de liquide sous pression dans la partie supérieure de la cuve tandis que le constituant solide est retiré de la partie inférieure de la cuve au moyen d'une unité de fluidisation (9) ayant à la fois un tuyau d'alimentation (10), qui est alimenté par du liquide sous pression de l'extérieur de la cuve à travers une quatrième conduite (8) et a un orifice de sortie donnant dans la cuve, et un tuyau de décharge (11) à l'intérieur du tuyau d'alimentation et menant à travers une cinquième conduite (12) à l'extérieur de la cuve vers l'emplacement d'exportation souhaité.

2. Procédé selon la revendication 1, dans lequel les troisième (5) et quatrième (8) conduites sont alimentées à partir d'une alimentation de liquide commune.

3. Procédé selon la revendication 1 ou la revendication 2, dans lequel la troisième conduite (5) rejoint la deuxième conduite (3), l'écoulement à travers les deuxième et troisième conduites dans les première et deuxième étapes étant commandé par des soupapes (4, 7).

4. Procédé selon l'une quelconque des revendications précédentes, dans lequel une deuxième unité de fluidisation (14) est aménagée dans une source de suspension pour acheminer la suspension à travers la première conduite (2) dans la partie supérieure de la cuve de décantation (1), la deuxième unité de fluidisation ayant un deuxième tuyau d'alimentation (18), qui est alimenté par du liquide sous pression, et un deuxième tuyau de décharge (16) à l'intérieur du tuyau d'alimentation et menant à la première conduite.

5. Procédé selon la revendication 4, dans lequel une pompe à jet (15) est aménagée sur le deuxième tuyau de décharge (16) pour augmenter l'écoulement de suspension à travers la deuxième unité de fluidisation (14) vers la première conduite (2).

6. Procédé selon l'une quelconque des revendications précédentes, dans lequel la première conduite (2) est fermée par une soupape à flotteur lors du passage à la deuxième étape.

7. Procédé selon la revendication 6, dans lequel la soupape à flotteur est une bille.

8. Procédé selon la revendication 7, dans lequel la bille est guidée par une cage inclinée sur un siège.

9. Procédé selon la revendication 7, dans lequel la bille est non contrainte à l'intérieur de la cuve de décantation.

10. Procédé selon l'une quelconque des revendications précédentes, dans lequel le liquide quittant le tuyau d'alimentation (10) tourbillonne autour d'un axe commun du tuyau d'alimentation et du tuyau de décharge de manière à générer un vortex qui entraîne le constituant solide et le transporte à travers le tuyau de décharge (11).

11. Procédé selon l'une quelconque des revendications précédentes, dans lequel le tuyau de décharge (11) fait saillie au-delà de l'orifice de sortie du tuyau d'alimentation (10).

12. Procédé selon la revendication 10, dans lequel le tourbillon est généré par des encoches inclinées dans la paroi du tuyau d'alimentation (10).

13. Procédé selon l'une quelconque des revendications précédentes, dans lequel une pluralité de cuves de décantation (1) sont aménagées, de manière à ce que pendant que les solides sont retirés d'une cuve durant la deuxième étape, d'autres solides sont chargés dans une autre cuve durant la première étape.
